(19) Europäisches Patentamt / European Patent Office / Office européen des brevets

(11) **EP 4 773 071 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*G06T 1/20* (2006.01)

(21) Application number: 25751425.7

(22) Date of filing: 27.01.2025

(86) International application number:
PCT/CN2025/075375

(87) International publication number:
WO 2025/167825 (14.08.2025 Gazette 2025/33)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 07.02.2024 CN 202410175803

(71) Applicant: **Beijing Horizon Information Technology Co., Ltd.**
**Beijing 100094 (CN)**

(72) Inventor: **SHEN, Youjin**
**Beijing 100094 (CN)**

(74) Representative: **Casalonga**
**Casalonga & Partners**
**Bayerstraße 71/73**
**80335 München (DE)**

(54) **FUNCTION SAFETY-BASED IMAGE FRAME PROCESSING METHOD AND APPARATUS, STORAGE MEDIUM, AND DEVICE**

(57)    Disclosed are a functional safety-based image frame processing method and apparatus, a storage medium, and a device. The functional safety-based image frame processing method includes: during a process of converting an image format of a first image frame of a first image type to a second image type, determining error information of a hardware module in which a functional safety error occurs; determining, based on the error information, a reliability evaluation result of a second image frame converted to the second image type; determining a data attribute of the second image frame based on the reliability evaluation result of the second image frame; and performing post-processing on the second image frame according to a post-processing manner adapted to the data attribute. According to the embodiments of the present disclosure, adverse effects caused by the functional safety error occurring in the hardware module on an image processing path can be avoided.

```
During a process of converting an image format of a first image frame of
a first image type to a second image type, determining error information      ─310
of a hardware module in which a functional safety error occurs

                                   ↓

Determining, based on the error information, a reliability evaluation          ─320
result of a second image frame converted to the second image type

                                   ↓

Determining a data attribute of the second image frame based on the           ─330
reliability evaluation result of the second image frame

                                   ↓

Performing post-processing on the second image frame according to a           ─340
post-processing manner adapted to the data attribute
```

FIG. 3

EP 4 773 071 A1

**Description**

**CROSS-REFERENCE TO RELATED APPLICATION**

The present disclosure claims the priority to the Chinese patent application No. 202410175803.4, filed on February 07, 2024 and entitled "FUNCTIONAL SAFETY-BASED IMAGE FRAME PROCESSING METHOD AND APPARATUS, MEDIUM, AND DEVICE", the entireties of which are incorporated herein by reference

**FIELD OF THE INVENTION**

The present disclosure relates to image processing technologies, and in particular, to a functional safety-based image frame processing method and apparatus, a storage medium, and a device.

**BACKGROUND OF THE INVENTION**

In some scenarios, it is needed to process an image frame through an image processing path, and further use a processing result of the image processing path for subsequent processing. It should be noted that during a process of processing the image frame through the image processing path, a functional safety (function safety) error may occur in a hardware module on the image processing path, resulting in adverse effects.

**SUMMARY OF THE INVENTION**

To resolve the foregoing technical problem, the present disclosure provides a functional safety-based image frame processing method and apparatus, a storage medium, and a device, to avoid adverse effects caused by a functional safety error occurring in a hardware module on an image processing path during a process of processing an image frame through the image processing path.

According to an aspect of an embodiment of the present disclosure, a functional safety-based image frame processing method is provided, including:

during a process of converting an image format of a first image frame of a first image type to a second image type, determining error information of a hardware module in which a functional safety error occurs;

determining, based on the error information, a reliability evaluation result of a second image frame converted to the second image type;

determining a data attribute of the second image frame based on the reliability evaluation result of the second image frame; and

performing post-processing on the second image frame according to a post-processing manner adapted to the data attribute.

According to another aspect of an embodiment of the present disclosure, a functional safety-based image frame processing apparatus is provided, including:

a first determining module, configured to determine, during a process of converting an image format of a first image frame of a first image type to a second image type, error information of a hardware module in which a functional safety error occurs;

a second determining module, configured to determine, based on the error information determined by the first determining module, a reliability evaluation result of a second image frame converted to the second image type;

a third determining module, configured to determine a data attribute of the second image frame based on the reliability evaluation result of the second image frame that is determined by the second determining module; and

a post-processing module, configured to perform post-processing on the second image frame according to a post-processing manner adapted to the data attribute determined by the third determining module.

According to still another aspect of an embodiment of the present disclosure, a computer readable storage medium is provided. The storage medium stores a computer program, and the computer program is used for implementing the functional safety-based image frame processing method described above.

According to yet another aspect of an embodiment of the present disclosure, an electronic device is provided, where the electronic device includes:

a processor; and

a memory, configured to store processor-executable instructions, wherein

the processor is configured to read the executable instructions from the memory, and execute the executable instructions to implement the functional safety-based image frame processing method described above.

According to still yet another aspect of an embodiment of the present disclosure, a computer program product is provided. When instructions in the computer program product are executed by a processor, the functional safety-based image frame processing method described above is implemented.

Based on the functional safety-based image frame processing method and apparatus, the storage medium, the electronic device, and the computer program product that are provided in the embodiments of the present disclosure, during the process of processing the first image frame of the first image type through the image processing path to obtain the second image frame of the second image type, the error information of the hardware module in which a functional safety error occurs on the image processing path may be determined. Reliability evaluation may be performed on the second image frame based on the error information of the hardware module in which a functional safety error occurs, to obtain the reliability evaluation result of the second image frame, so as to determine the data attribute of the second image frame. Based on the data attribute of the second image frame, post-processing may be performed on the second image frame according to an appropriate post-processing manner. It should be noted that the data attribute of the second image frame is closely related to the error information of the hardware module in which a functional safety error occurs. Correspondingly, the post-processing manner for the second image frame is also closely related to the error information of the hardware module in which a functional safety error occurs. In other words, in the embodiments of the present disclosure, functional safety information of hardware modules on the image processing path is collected as a whole, and decision analysis is performed from an overall perspective, thereby ensuring rationality of the post-processing manner for the second image frame. In this way, it is beneficial for avoiding adverse effects caused by the functional safety error occurring in the hardware module on the image processing path. For example, reliability of a hardware system circuit (such as a system on chip) where the image processing path is located may be ensured.

## BRIEF DESCRIPTION OF THE DRAWINGS

FIG. 1 is a diagram of an operating principle of an image processing path according to some exemplary embodiments of the present disclosure;

FIG. 2 is an architectural diagram of a system according to some exemplary embodiments of the present disclosure;

FIG. 3 is a schematic flowchart of a functional safety-based image frame processing method according to some exemplary embodiments of the present disclosure;

FIG. 4 is a schematic flowchart of a method for determining a reliability evaluation result of a second image frame according to some exemplary embodiments of the present disclosure;

FIG. 5 is a schematic flowchart of a method for determining level weights corresponding respectively to a plurality of preset error levels according to some exemplary embodiments of the present disclosure;

FIG. 6 is a schematic flowchart of a method for determining a reliability evaluation result of a second image frame according to some other exemplary embodiments of the present disclosure;

FIG. 7 is a schematic flowchart of a method for determining a data attribute of a second image frame according to some exemplary embodiments of the present disclosure;

FIG. 8 is a schematic flowchart of a method for updating error information according to some exemplary embodiments of the present disclosure;

FIG. 9 is a principle diagram of avoiding adverse effects caused by a functional safety error occurring in a hardware module on an image processing path according to some exemplary embodiments of the present disclosure;

FIG. 10 is a schematic diagram of a structure of a functional safety-based image frame processing apparatus according to some exemplary embodiments of the present disclosure;

FIG. 11 is a schematic diagram of a structure of a second determining module according to some exemplary embodiments of the present disclosure;

FIG. 12 is a schematic diagram of a structure of a third determining module according to some exemplary embodiments of the present disclosure;

FIG. 13 is a schematic diagram of a structure of a functional safety-based image frame processing apparatus according to some other exemplary embodiments of the present disclosure; and

FIG. 14 is a diagram of a structure of an electronic device according to some exemplary embodiment of the present disclosure.

## DETAILED DESCRIPTION OF THE EMBODIMENTS

To explain the present disclosure, exemplary embodiments of the present disclosure are described below in detail with reference to accompanying drawings. Obviously, the embodiments described are merely some, rather than all of embodiments of the present disclosure. It should be understood that the present disclosure is not limited to the exemplary embodiments.

It should be noted that unless otherwise specified, the scope of the present disclosure is not limited by relative arrangement, numeric expressions, and numerical values of components and steps described in these embodiments.

Application overview

In some scenarios, it is needed to process an image frame through an image processing path, and further use a processing result of the image processing path for subsequent processing.

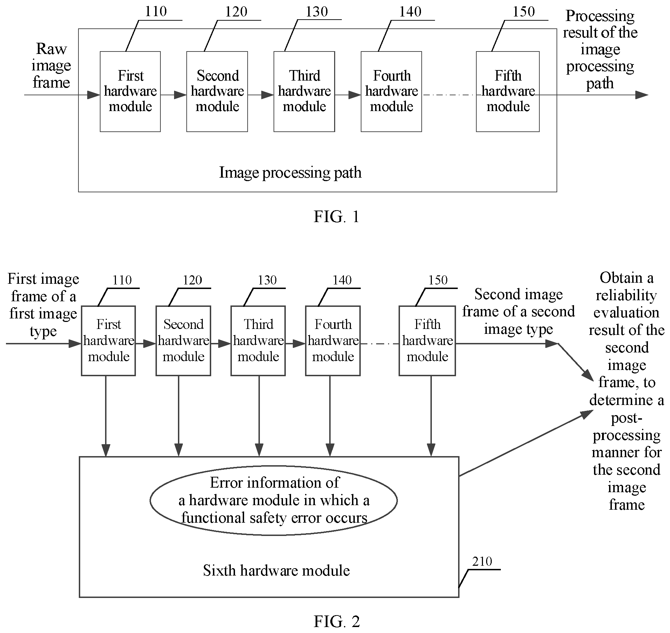

In an example, as shown in FIG. 1, the image processing path may include a first hardware module 110, a second hardware module 120, a third hardware module 130, a fourth hardware module 140, and a fifth hardware module 150.

Optionally, the first hardware module 110 may include a mobile industry processor interface (MIPI), and may be configured to receive a raw image frame collected by an image sensor and transfer the raw image frame to the second hardware module 120. The second hardware module 120 may transfer the raw image frame from the first hardware module 110 to the third hardware module 130. The raw image frame may also be referred to as raw data.

Optionally, the third hardware module 130 may include an image signal processor (ISP). The third hardware module 130 may perform predetermined processing on the raw image frame from the second hardware module 120, and output an image frame of a specific image type (hereinafter referred to as image type 1 for ease of description) to the fourth hardware module 140 based on the raw image frame on which the predetermined processing is performed by the third hardware module 130. The predetermined processing may include, but is not limited to, black level correction, digital gain, defect pixel correction, color difference correction, exposure adjustment, white balance, wide dynamic range adjustment, lens shading correction, noise reduction, color correction, and color space conversion.

Optionally, the fourth hardware module 140 may process the image frame of the image type 1 that is from the third hardware module 130 to obtain an image frame of another image type (hereinafter referred to as image type 2 for ease of description), and output the image frame of the image type 2 to the fifth hardware module 150. Each of the image type 1 and the image type 2 may be a specific YUV type. It may be understood that Y represents brightness, and both U and V represent chromaticity.

Optionally, the fifth hardware module 150 may include a neural network accelerator. The fifth hardware module 150 may process the image frame of the image type 2 that is from the fourth hardware module 140 by a visual perception algorithm, so as to obtain a visual perception result. For example, the fifth hardware module 150 may perform object detection on the image frame of the image type 2 that is from the fourth hardware module 140, to obtain an image frame with a plurality of detection boxes and of the image type 2. The image frame with a plurality of detection boxes and of the image type 2 may be used as a processing result of the image processing path for the raw image frame. The processing result of the image processing path for the raw image frame may be used for subsequent processing. For example, the image processing path may be located in a driving control-related hardware system circuit of a vehicle, and the processing result of the image processing path for the raw image frame may be used for autonomous driving, advanced driver assistance, and the like of the vehicle. In an example, the hardware system circuit may include a system on chip (SoC).

It should be noted that during the process of processing the raw image frame through the image processing path, a functional safety error may occur in the hardware module on the image processing path, resulting in adverse effects. For example, the functional safety error occurring in the hardware module on the image processing path may affect reliability of the hardware system circuit. Therefore, it is necessary to take some measures to avoid the adverse effects caused by the functional safety error occurring in the hardware module on the image processing path as possible.

Exemplary system

To avoid adverse effects caused by a functional safety error occurring in a hardware module on an image processing path as possible, as shown in FIG. 2, a sixth hardware module 210 may be introduced. The sixth hardware module 210 may also be referred to as a message network module.

In embodiments of the present disclosure, a first image frame of a first image type may be processed through the image processing path, to obtain a second image frame of a second image type. Moreover, during the process of processing the first image frame through the image processing path, error information of the hardware module in which a functional safety error occurs on the image processing path may be obtained by the sixth hardware module 210. Reliability evaluation may be performed on the second image frame based on the error information obtained by the sixth hardware module 210. Based on a reliability evaluation result of the second image frame, an appropriate post-processing manner may be adopted to perform post-processing on the second image frame, so as to avoid the adverse effects caused by the functional safety error of the hardware module on the image processing path as possible

Exemplary method

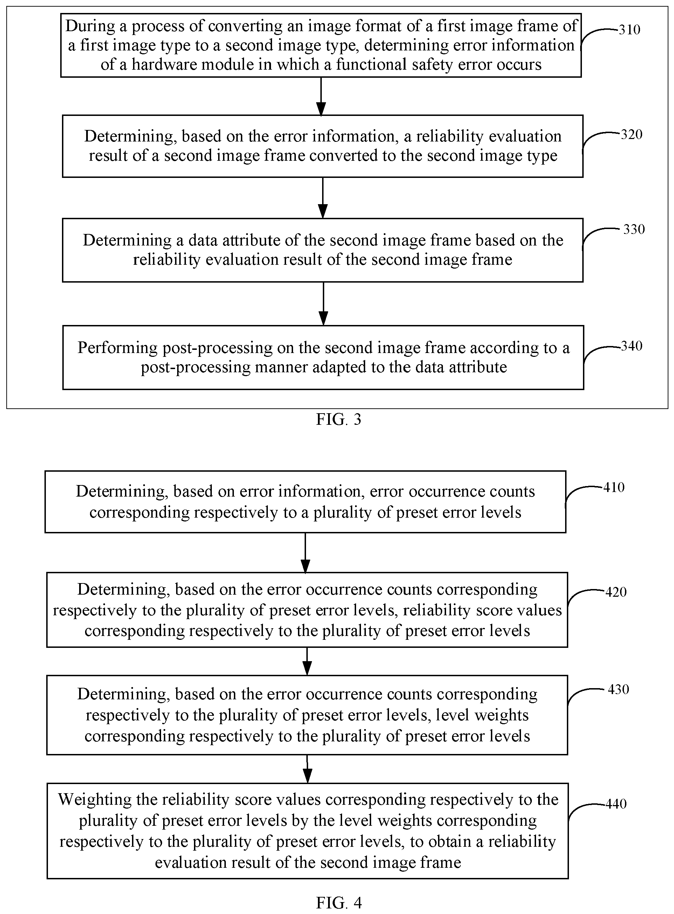

FIG. 3 is a schematic flowchart of a functional safety-based image frame processing method according to some exemplary embodiments of the present disclosure. The method shown in FIG. 3 may include steps 310, 320, 330, and 340.

Step 310: During a process of converting an image format of a first image frame of a first image type to a second image type, determining error information of a hardware module in which a functional safety error occurs.

The first image frame of the first image type may be obtained before step 310. Optionally, the first image frame of the first image type may be the raw image frame collected by the image sensor that is described above. In this way, the first image type may include, but is not limited to, a RGGB type, a BGGR type, a GBRG type, and a RGBIR type, which are not enumerated herein. It may be understood that R represents red, G represents green, B represents blue, and IR represents infrared.

In step 310, the first image frame of the first image type may be processed through the image processing path, to achieve image format conversion from the first image type to the second image type, thereby obtaining a second image frame of the second image type. Optionally, the second image frame of the second image type may be the processing result of the image processing path for the raw image frame that is described above. In this way, the second image type may be the image type 2 described above.

In addition, in step 310, during the process of processing the first image frame through the image processing path, the error information of the hardware module in which a functional safety error occurs on the image processing path may also be obtained by the sixth hardware module 210 in FIG. 2.

Optionally, the hardware module on the image processing path may perform error detection on the module per se to obtain error information, and report the obtained error information to the sixth hardware module 210.

Optionally, there may be one, two, three, or more hardware modules in which the functional safety errors occur, which are not enumerated herein. In an example, there may be five hardware modules in which the functional safety errors occur, including the first hardware module 110, the second hardware module 120, the third hardware module 130, the fourth hardware module 140, and the fifth hardware module 150 in FIG. 2.

Optionally, the error information of the hardware module in which a functional safety error occurs may also be referred to as fusa information. The error information of the hardware module in which a functional safety error occurs may include, but is not limited to, an error type and an error severity level. The error type may include, but is not limited to, a transmission error type, a power error type, and a clock error type. The error severity level may include, but is not limited to, a level L1, a level L2, a level L3, a level L4, and a level L5.

It is assumed that an automatic driving system or an advanced driver assistance system (ADAS) is referred to as a system for short, and definitions of levels L1 to L5 may be as follows:

    (1) level L1: Negligible errors, having no impact on the system;
    (2) Level L2: Minor errors, wherein system alarm may be triggered;
    (3) level L3: General errors, wherein some driving functions need to be downgraded;
    (4) level L4: Less severe errors, wherein attempts to self recovery are required; and
    (5) level L5: Severe errors, wherein the system needs to be shut down to enter a safety island status.

Step 320: Determining, based on the error information, a reliability evaluation result of a second image frame converted to the second image type.

In step 320, reliability evaluation may be performed on the second image frame based on the error information of the hardware module in which a functional safety error occurs, to obtain the reliability evaluation result of the second image frame. Optionally, the reliability evaluation result may be presented in a numerical form, wherein a larger value indicates higher reliability of the second image frame and a smaller value indicates lower reliability of the second image frame. Alternatively, the reliability evaluation result may be presented in a binary classification form. If the classification is 1, it indicates that the reliability of the second image frame meets requirements. If the classification is 0, it indicates that the reliability of the second image frame does not meet the requirements.

Step 330: Determining a data attribute of the second image frame based on the reliability evaluation result of the second image frame.

Optionally, the data attribute of the second image frame may be used to indicate whether the second image frame is suitable for a preset driving task, which may include, but is not limited to, an automatic driving task and an advanced driver assistance task.

If the reliability evaluation result of the second image frame is presented in the numerical form, the data attribute indicating that the second image frame is suitable for the preset driving task may be determined when a value is greater than a preset value, and the data attribute indicating that the second image frame is not suitable for the preset driving task may be determined when the value is less than or equal to the preset value.

If the reliability evaluation result of the second image frame is presented in the binary classification form, the data attribute indicating that the second image frame is suitable for the preset driving task may be determined when the classification is 1, and the data attribute indicating that the second image frame is not suitable for the preset driving task may be determined when the classification is 0.

Certainly, manners for determining the data attribute is not limited hereto. For a clear layout, description is made below by examples.

Step 340: Performing post-processing on the second image frame according to a post-processing manner adapted to the data attribute.

If the data attribute indicates that the second image frame is suitable for the preset driving task, a first type of post-processing manner may be adopted to perform post-processing on the second image frame. For example, the second image frame may be used for the preset driving task.

If the data attribute indicates that the second image frame is not suitable for the preset driving task, a second type of post-processing manner different from the first type of post-processing manner may be adopted to perform post-processing on the second image frame. For example, the second image frame may be prohibited from being used for the preset driving task.

In the embodiments of the present disclosure, during the process of processing the first image frame of the first image type through the image processing path to obtain the second image frame of the second image type, the error information of the hardware module in which a functional safety error occurs on the image processing path may be determined. Reliability evaluation may be performed on the second image frame based on the error information of the hardware module in which a functional safety error occurs, to obtain the reliability evaluation result of the second image frame, so as to determine the data attribute of the second image frame. Based on the data attribute of the second image frame, post-processing may be performed on the second image frame according to an appropriate post-processing manner. It should be noted that the data attribute of the second image frame is closely related to the error information of the hardware module in which a functional safety error occurs. Correspondingly, the post-processing manner for the second image frame is also closely related to the error information of the hardware module in which a functional safety error occurs. In other words, in the embodiments of the present disclosure, functional safety information of hardware modules on the image processing path is collected as a whole, and decision analysis is performed from an overall perspective, thereby ensuring rationality of the post-processing manner for the second image frame. In this way, it is beneficial for avoiding adverse effects caused by the functional safety error occurring in the hardware module on the image processing path. For example, reliability of a hardware system circuit (such as a system on chip) where the image processing path is located may be ensured.

In some optional examples, step 340 of the present disclosure may include:

in response to the data attribute indicating that the second image frame is suitable for a preset driving task, performing, based on the second image frame, driving control on a movable device where a sensor for collecting the first image frame is located; and

discarding the second image frame in response to the data attribute indicating that the second image frame is not suitable for the preset driving task.

Optionally, the sensor for collecting the first image frame may be the image sensor described above, such as a camera. The movable device where the sensor for collecting the first image frame is located may include, but is not limited to, a vehicle, an airplane, a train, and a ship, which are not enumerated herein.

If the data attribute indicates that the second image frame is suitable for the preset driving task, driving control may be performed on the movable device based on the second image frame. For example, if it is determined based on the second image frame that there is an obstacle at a certain distance in front of the vehicle, to avoid collision, the vehicle may be controlled to slow down or brake. For another example, if it is determined based on the second image frame that the vehicle deviates in direction relative to a current lane, a moving direction of the vehicle may be controlled to keep the vehicle within that lane. In this way, referring to visual information, driving control may be reasonably performed on the movable device, so as to ensure driving reliability and safety of the movable device.

The second image frame may be directly discarded if the data attribute indicates that the second image frame is not suitable for the preset driving task. For example, the second image frame may be directly deleted. In this way, occupation of the second image frame for storage space may be avoided, and the second image frame may be prevented from affecting the driving reliability and safety of the movable device.

FIG. 4 is a schematic flowchart of a method for determining a reliability evaluation result of a second image frame according to some exemplary embodiments of the present disclosure. The method shown in FIG. 4 may include steps 410, 420, 430, and 440. Optionally, a combination of steps 410 to 440 may be used as an optional implementation of step 320 in the present disclosure.

Step 410: Determining, based on the error information, error occurrence counts corresponding respectively to a plurality of preset error levels.

Optionally, the plurality of preset error levels may include the level L1, the level L2, the level L3, the level L4, and the level L5 described above.

Optionally, the error information may include a plurality pieces of recorded information, such as R pieces of recorded information, each of which may include an error type, an error severity level, and a module identifier of a hardware module. The error occurrence count corresponding to the level L1 may be determined by counting a quantity of recorded information at the level L1 among the R pieces of recorded information. In an example, the error occurrence count corresponding to the level L1 is 3 if there are 20 pieces of recorded information and there are 3 pieces of recorded information at the level L1 among the 20 pieces of recorded information. The error occurrence counts corresponding respectively to the level L2, the level L3, the level L4, and the level L5 may be determined in a similar way.

Step 420: Determining, based on the error occurrence counts corresponding respectively to the plurality of preset error levels, reliability score values corresponding respectively to the plurality of preset error levels.

Optionally, a target function may be preset with the error occurrence count as an independent variable and the reliability score value as a dependent variable, wherein the independent variable is negatively correlated with the dependent variable. The target function may include, but is not limited to, an inverse proportional function, or an exponential function with a base greater than 0 and less than 1.

In step 420, for any one of the plurality of preset error levels, the reliability score value corresponding to that preset error level may be obtained by simply substituting the error occurrence count corresponding to that preset error level as a value of the independent variable into the target function for operation.

Step 430: Determining, based on the error occurrence counts corresponding respectively to the plurality of preset error levels, level weights corresponding respectively to the plurality of preset error levels.

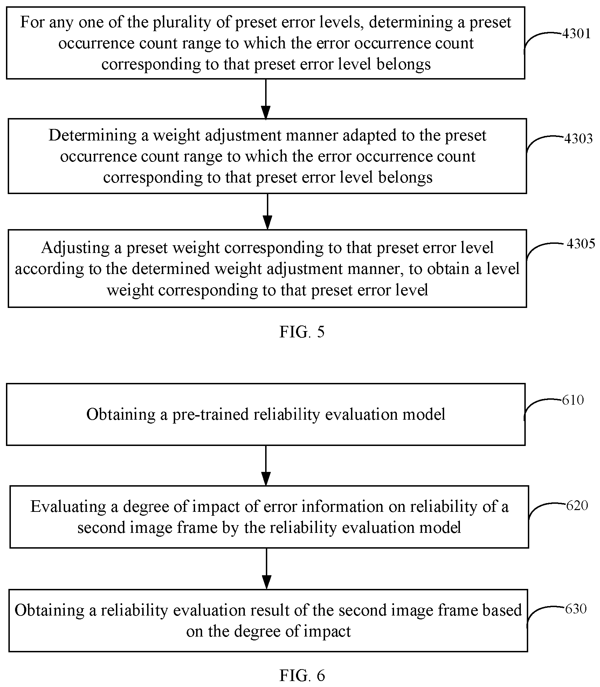

In some optional implementations of the present disclosure, as shown in FIG. 5, step 430 may include steps 4301, 4303, and 4305.

Step 4301: For any one of the plurality of preset error levels, determining a preset occurrence count range to which the error occurrence count corresponding to that preset error level belongs.

Optionally, a plurality of preset occurrence count ranges may be preset, such as (0, c1], (c1, c2], (c2, c3], and (c3, c4],etc..

In step 4301, for any one of the plurality of preset error levels, the error occurrence count corresponding to that preset error level may be respectively compared with the plurality of preset occurrence count ranges, to determine the preset occurrence count range to which the error occurrence count corresponding to that preset error level belongs.

Step 4303: Determining a weight adjustment manner adapted to the preset occurrence count range to which the error occurrence count corresponding to that preset error level belongs.

Optionally, a correspondence between the plurality of preset occurrence count ranges and a plurality of weight adjustment manners may be preset. The weight adjustment manner may indicate a weight adjustment rule, such as keeping the weight unchanged, adjusting the weight upwards by a certain proportion, or adjusting the weight downwards by a certain proportion.

In step 4303, the weight adjustment manner corresponding to the preset occurrence count range that is determined in step 4301 may be determined based on the preset correspondence, and the determined weight adjustment manner may be considered as the weight adjustment manner adapted to the preset occurrence count range.

Step 4305: Adjusting a preset weight corresponding to that preset error level according to the determined weight adjustment manner, to obtain a level weight corresponding to that preset error level.

Optionally, a correspondence between the plurality of preset error levels and a plurality of preset weights may be preset. In an example, a preset weight corresponding to the level L1 may be represented by k1, a preset weight corresponding to the level L2 may be represented by k2, a preset weight corresponding to the level L3 may be represented by k3, a preset weight corresponding to the level L4 may be represented by k4, and a preset weight corresponding to the level L5 may be represented by k5, wherein it is satisfied that k1<k2<k3<k4<k5.

In step 4305, the preset weight may be adjusted according to the weight adjustment manner determined in step 4303, to obtain the corresponding level weight.

In an example, the error occurrence count corresponding to the level L1 is 10, belonging to the preset occurrence count range of (c3, c4]. If the weight adjustment manner adapted to the preset occurrence count range of (c3, c4] indicates an upward adjustment of the weight by 20%, 1.2k1 may be used as the level weight corresponding to the level L1.

In another example, the error occurrence count corresponding to the level L2 is 5, belonging to the preset occurrence count range of (c2, c3]. If the weight adjustment manner adapted to the preset occurrence count range of (c2, c3] indicates an upward adjustment of the weight by 15%, 1.15k2 may be used as the level weight corresponding to the level L2.

In the implementation shown in FIG. 5, for any one of the plurality of preset error levels, the preset weight corresponding to that preset error level may be adjusted in an appropriate weight adjustment manner with reference to the error occurrence count corresponding to that preset error level. For example, for a relatively lower preset error level, if errors occur frequently, the preset weight corresponding to that preset error level may be appropriately enlarged to obtain the corresponding level weight. In this way, it is beneficial to ensure rationality of the level weight corresponding to that preset error level.

Step 440: Weighting the reliability score values corresponding respectively to the plurality of preset error levels by the level weights corresponding respectively to the plurality of preset error levels, to obtain a reliability evaluation result of the second image frame.

In step 440, the reliability score values corresponding respectively to the plurality of preset error levels may be weighted and averaged by the level weights corresponding respectively to the plurality of preset error levels, to obtain a reliability evaluation score of the second image frame. The reliability evaluation score of the second image frame may be used as the reliability evaluation result of the second image frame.

In an example, if the level weight and the reliability score value corresponding to the level L1 are respectively represented by k1' and S1, the level weight and the reliability score value corresponding to the level L2 are respectively represented by k2' and S2, the level weight and the reliability score value corresponding to the level L3 are respectively represented by k3 'and S3, the level weight and the reliability score value corresponding to the level L4 are respectively represented by k4' and S4, the level weight and the reliability score value corresponding to the level L5 are respectively represented by k5 'and S5, and the reliability evaluation score of the second image frame is represented by S, it is satisfied that:

$$S = \frac{k1' * S1 + k2' * S2 + k3' * S3 + k4' * S4 + k5' * S5}{k1' + k2' + k3' + k4' + k5'}.$$

It should be noted that the manner of determining the level weights corresponding respectively to the plurality of preset error levels is not limited to the implementation shown in FIG. 5. For example, this manner is similar to that of determining the reliability score values corresponding respectively to the plurality of preset error levels. To determine the level weight, a function with the error occurrence count as an independent variable and the level weight as a dependent variable may be introduced, wherein the independent variable is positively correlated with the dependent variable. For example, a directly proportional function is introduced.

In the embodiments of the present disclosure, the reliability score values and the level weights corresponding respectively to the plurality of preset error levels may be determined by the error occurrence count as a reference factor. The reliability evaluation result of the second image frame may be efficiently and quickly obtained by performing weighted processing on this basis. In this way, occurrence counts of functional safety errors at different error levels are comprehensively considered in the process of determining the reliability evaluation result of the second image frame, so that overall impact of the functional safety errors on the image frame can be evaluated, helping to ensure rationality of the determined reliability evaluation result.

FIG. 6 is a schematic flowchart of a method for determining a reliability evaluation result of a second image frame according to some other exemplary embodiments of the present disclosure. The method shown in FIG. 6 may include steps 610, 620, and 630. Optionally, a combination of steps 620 and 630 may be used as an optional implementation of step 320 in the present disclosure.

Step 610: Obtaining a pre-trained reliability evaluation model.

Optionally, before the functional safety-based image frame processing method provided in the embodiments of the present disclosure is implemented, a large amount of sample data may be utilized for model training, to obtain a reliability evaluation model. Each piece of sample data may include an image frame, the error information of the hardware module on the image processing path, and annotated information indicating a degree of impact of the error information on reliability of this image frame. In some embodiments, the degree of impact may be presented in a form of an impact score, wherein a larger impact score indicates greater impact of the error information on the reliability of the image frame, and a smaller impact score indicates smaller impact of the error information on the reliability of the image frame. In some other embodiments, the degree of impact may be presented in a form of an impact level, wherein a higher impact level indicates greater impact of the error information on the reliability of the image frame, and a lower impact level indicates smaller impact of the error information on the reliability of the image frame. In still some other embodiments, the degree of impact may also be presented in a form of a percentage of impact. In this way, the reliability evaluation model obtained through training may effectively evaluate a degree of impact of given error information on reliability of a given image frame.

Step 620: Evaluating a degree of impact of the error information on reliability of the second image frame by the reliability evaluation model.

In step 620, the second image frame and the error information determined in step 320 may be used as input data of the reliability evaluation model, which may perform operations on the error information based on the input data, to evaluate the degree of impact of the error information determined in step 320 on the reliability of the second image frame.

Step 630: Obtaining the reliability evaluation result of the second image frame based on the degree of impact.

In some embodiments, the degree of impact obtained in step 620 may be presented in a form of an impact score. If the impact score is greater than a preset score, a reliability evaluation result indicating that the reliability of the second image frame does not meet requirements may be obtained. If the impact score is less than or equal to the preset score, a reliability evaluation result indicating that the reliability of the second image frame meets requirements may be obtained.

In some other embodiments, the degree of impact obtained in step 620 may be presented in a form of an impact level. If the impact level is higher than a preset level, a reliability evaluation result indicating that the reliability of the second image frame does not meet requirements may be obtained. If the impact level is lower than or equal to the preset level, a reliability evaluation result indicating that the reliability of the second image frame meets requirements may be obtained.

In the embodiments of the present disclosure, the reliability evaluation model is trained based on a large amount of sample data, and can objectively and accurately evaluate the impact of the given error information on the reliability of the given image frame. Therefore, obtaining the reliability evaluation result of the second image frame based on the reliability evaluation model can better ensure objectivity and accuracy of the reliability evaluation result.

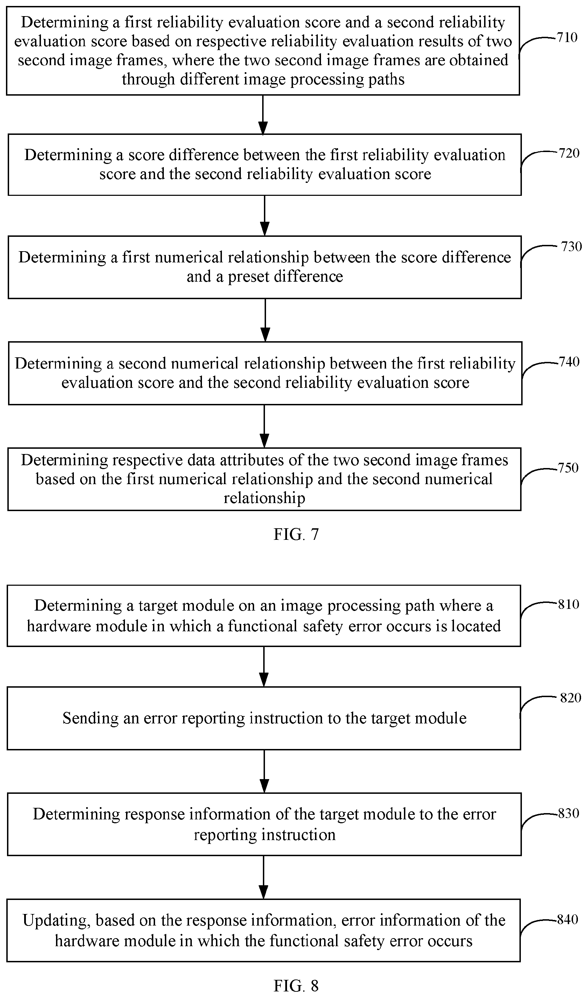

FIG. 7 is a schematic flowchart of a method for determining a data attribute of a second image frame according to some exemplary embodiments of the present disclosure. The method shown in FIG. 7 may include steps 710, 720, 730, 740, and 750. Optionally, a combination of steps 710 to 750 may be used as an optional implementation of step 330 in the present disclosure.

Step 710: Determining a first reliability evaluation score and a second reliability evaluation score based on respective reliability evaluation results of two second image frames, wherein the two second image frames are obtained through different image processing paths.

Optionally, the first image frame may be processed separately through two image processing paths, to obtain two second image frames in one-to-one correspondence to the two image processing paths.

In an example, the first image frame is image frame P1, and the two image processing paths are image processing path W1 and image processing path W2. The second image frame obtained by processing the image frame P1 through the image processing path W1 is image frame P2, and the second image frame obtained by processing the image frame P1 through the image processing path W2 is image frame P3. In this case, error information of a hardware module in which a functional safety error occurs on the image processing path W1 may be determined during the process of processing the image frame P1 through the image processing path W1, and a reliability evaluation result of the image frame P2 may be determined based on the error information. Similarly, error information of a hardware module in which a functional safety error occurs on the image processing path W2 during the process of processing the image frame P1 through the image processing path W2 may be determined, and a reliability evaluation result of the image frame P3 may be determined based on the error information. The reliability evaluation results of the image frame P2 and the image frame P3 may each include a reliability evaluation score. In this case, the reliability evaluation score in the reliability evaluation result of the image frame P2 may be used as the first reliability evaluation score, and the reliability evaluation score in the reliability evaluation result of the image frame P3 may be used as the second reliability evaluation score.

Certainly, the manner of determining the first reliability evaluation score and the second reliability evaluation score is not limited thereto. For example, a reliability evaluation score may be respectively obtained from the reliability evaluation results of the image frame P2 and the image frame P3, so as to obtain two reliability evaluation scores, and normalization processing may be performed on the two reliability evaluation scores. One of the two normalized reliability evaluation scores may be used as the first reliability evaluation score, and the other may be used as the second reliability evaluation score.

Step 720: Determining a score difference between the first reliability evaluation score and the second reliability evaluation score.

In step 720, a difference between the first reliability evaluation score and the second reliability evaluation score may be obtained, and an absolute value of a difference result may be calculated, wherein the absolute value may be used as the score difference.

Step 730: Determining a first numerical relationship between the score difference and a preset difference.

Optionally, the first numerical relationship may be represented by a magnitude relationship or a proportional relationship between the score difference and the preset difference.

Step 740: Determining a second numerical relationship between the first reliability evaluation score and the second reliability evaluation score.

Optionally, the second numerical relationship may be represented by a magnitude relationship or a proportional relationship between the first reliability evaluation score and the second reliability evaluation score.

Step 750: Determining respective data attributes of the two second image frames based on the first numerical relationship and the second numerical relationship.

Still taking the case of two second image frames, that is, the image frame P2 and the image frame P3, as an example, if it is assumed that the first reliability evaluation score is S and corresponds to the image frame P2, and the second reliability evaluation score is S' and corresponds to the image frame P3, it is satisfied that:

(1) if the first numerical relationship indicates that the score difference is less than the preset difference and the second numerical relationship indicates that S is greater than S', the data attribute of the image frame P2 indicates that the image frame P2 is suitable for a preset driving task, while the data attribute of the image frame P3 indicates that the image frame P3 is not suitable for the preset driving task;

(2) if the first numerical relationship indicates that the score difference is less than the preset difference and the second numerical relationship indicates that S is less than S', the data attribute of the image frame P3 indicates that the image frame P3 is suitable for the preset driving task, while the data attribute of the image frame P2 indicates that the image frame P2 is not suitable for the preset driving task;

(3) if the first numerical relationship indicates that the score difference is greater than or equal to the preset difference, regardless of the second numerical relationship, the data attribute of the image frame P2 indicates that the image frame P2 is not suitable for the preset driving task, and the data attribute of the image frame P3 indicates that the image frame P3 is not suitable for the preset driving task.

In the embodiments of the present disclosure, the first image frame may be processed through two image processing paths with consistent structures and parameters, to obtain two second image frames; and the first reliability evaluation score corresponding to one of the second image frames and the second reliability evaluation score corresponding to the other second image frame may be determined. The score difference between the first reliability evaluation score and the second reliability evaluation score may be used to indicate a magnitude of difference between processing results of the two image processing paths for the first image frame. The first numerical relationship between the score difference and the preset difference may indicate whether the difference is within a reasonable range. The second numerical relationship between the first reliability evaluation score and the second reliability evaluation score may indicate relative reliability of the two second image frames. It should be noted that theoretically, the processing results of two image processing channels for the first image frame are basically consistent. Therefore, whether an actual situation of the processing results of the two image processing channels for the first image frame matches a theoretical situation can be verified based on the first numerical relationship, and thus determining the data attributes reasonably. In addition, based on the second numerical relationship, the relative reliability of the different second image frames can be applied to the process of determining the data attributes. Considering more factors in the determining process helps to ensure rationality of the determined data attributes.

FIG. 8 is a schematic flowchart of a method for updating error information according to some exemplary embodiments of the present disclosure. The method shown in FIG. 8 may include steps 810, 820, 830, and 840. Optionally, the method shown in FIG. 8 may be implemented after step 310 in the present disclosure.

Step 810: Determining a target module on an image processing path where the hardware module in which the functional safety error occurs is located.

If it is assumed that the error information determined in step 310 includes error information of the first hardware module 110, the second hardware module 120, and the fourth hardware module 140 in FIG. 2, the target module determined in step 810 may include at least one of the third hardware module 130 and the fifth hardware module 150 in FIG. 2. In other words, the target module may include at least some of remaining hardware modules on the image processing path, other than the first hardware module 110, the second hardware module 120, and the fourth hardware module 140.

Step 820: Sending an error reporting instruction to the target module.

Taking a case where the target module includes the third hardware module 130 and the fifth hardware module 150 as an example, in step 820, error reporting instructions may be sent to the third hardware module 130 and the fifth hardware module 150 respectively by the sixth hardware module 210 in FIG. 2.

Step 830: Determining response information of the target module to the error reporting instruction.

Optionally, during the process of processing the first image frame through the image processing path, the hardware module on the image processing path may detect whether there is a functional safety error in that module. If yes, corresponding recorded information may be generated and stored. For composition of the recorded information, reference may be made to the relevant introduction described above.

After the error reporting instruction is received by the third hardware module 130, if the recorded information is stored in the third hardware module 130, the recorded information may be carried in the response information and be sent to the sixth hardware module 210. If there is no recorded information stored in the third hardware module 130, the third hardware module 150 may directly send response information indicating that there is no functional safety error in the third hardware module 130 to the sixth hardware module 210. In this way, the sixth hardware module 210 may receive the response information from the third hardware module 130.

Step 840: Updating, based on the response information, the error information of the hardware module in which the functional safety error occurs.

If it is assumed that the response information of the third hardware module 130 and the fifth hardware module 150 to the error reporting instructions includes some recorded information, the recorded information in the response information of the third hardware module 130 and the fifth hardware module 150 to the error reporting instructions may be fused with the error information determined in step 310. A fusion result may be used as an update result of the error information determined in step 310.

In an example, the error information determined in step 310 is shown in Table 1 below.

Table 1 Error Information

| Hardware module | Error type | Error severity level |
|---|---|---|
| First hardware module | Transmission error type | Level L2 |
| Second hardware module | Power error type | Level L3 |
| Fourth hardware module | Clock error type | Level L4 |
| Second hardware module | Transmission error type | Level L2 |

If it is assumed that the response information sent by the third hardware module 130 includes the power error type and the level L3, and the error information sent by the fifth hardware module 150 includes the clock error type and the level L4, Table 1 may be updated to obtain the following Table 2.

Table 2 Update Result of Error Information

| Hardware module | Error type | Error severity level |
|---|---|---|
| First hardware module | Transmission error type | Level L2 |
| Second hardware module | Power error type | Level L3 |
| Fourth hardware module | Clock error type | Level L4 |
| Second hardware module | Transmission error type | Level L2 |
| Third hardware module | Power error type | Level L3 |
| Fifth hardware module | Clock error type | Level L4 |

Table 2 may be used as the update result of the error information determined in step 310.

In the embodiments of the present disclosure, if the error information determined in step 310 only includes the error information corresponding to some of the hardware modules on the image processing path, error reporting instructions may be sent to at least some of the remaining modules on the image processing path, and the error information may be updated based on the response information of the at least some of the remaining modules to the error reporting instructions. In this way, it is beneficial to ensure integrity of the error information for determining the reliability evaluation result of the second image frame, and avoid omission of the error information, thereby better ensuring accuracy of the reliability evaluation result.

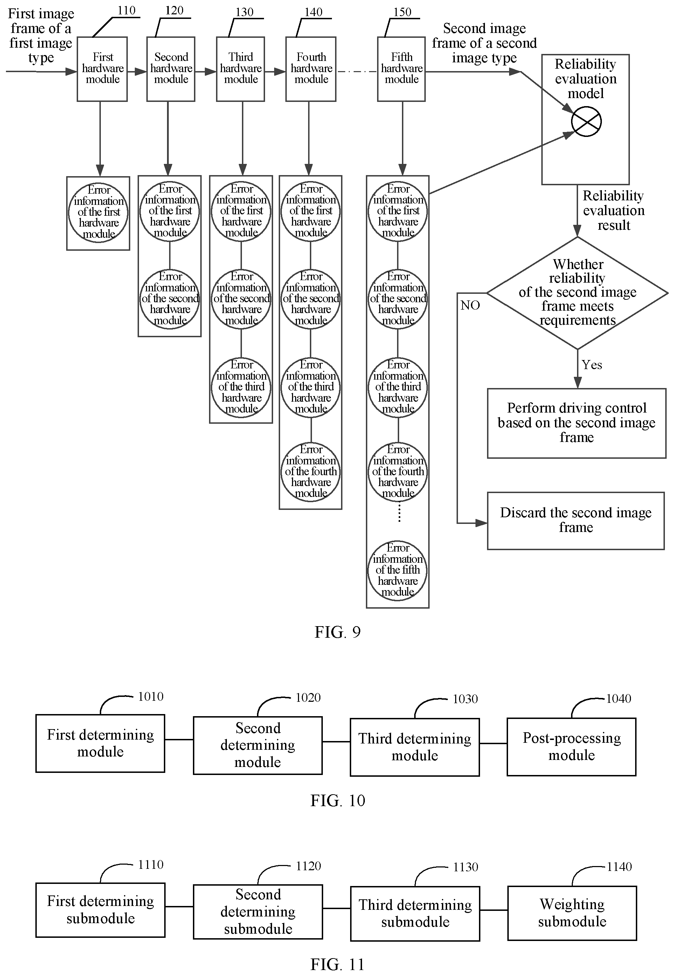

In some optional examples, as shown in FIG. 9, the first image frame of the first image type may be processed through the image processing path, to obtain the second image frame of the second image type. Moreover, during the process of processing the first image frame through the image processing path, the error information of the hardware module in which a functional safety error occurs on the image processing path may be obtained by the sixth hardware module 210. For example, during the processing of the first hardware module 110, the error information may be obtained for the first hardware module 110; during the processing of the second hardware module 120, the error information may be obtained for the second hardware module 120; ...; and during the processing of the fifth hardware module 150, the error information may be obtained for the fifth hardware module 150.

The error information obtained by the sixth hardware module 210 may be collected after the second image frame is obtained through the image processing path. Based on the second image frame and the collected error information, the reliability evaluation model may be used to evaluate a degree of impact of the collected error information on the reliability of the second image frame. The reliability evaluation result of the second image frame may be obtained based on the degree of impact. The reliability evaluation result of the second image frame may be used to indicate whether the reliability of the second image frame meets requirements. If the reliability of the second image frame meets the requirements, driving control may be performed on the movable device based on the second image frame, thereby ensuring reliability of automated driving or advanced driver assistance. The second image frame may be directly discarded if the reliability thereof does not meet the requirements.

In view of the above, by adopting the embodiments of the present disclosure, the functional safety errors of the hardware modules on the image processing path may not be processed separately, but the functional safety information of the hardware modules on the image processing path is collected as a whole, and decision analysis is performed from an overall perspective, thereby ensuring rationality of the post-processing manner for the second image frame, and further effectively avoiding the adverse effects caused by the functional safety errors of the hardware modules on the image processing path.

Exemplary apparatus

FIG. 10 is a schematic diagram of a structure of a functional safety-based image frame processing apparatus according to some exemplary embodiments of the present disclosure. The apparatus shown in FIG. 10 includes a first determining module 1010, a second determining module 1020, a third determining module 1030, and a post-processing module 1040.

The first determining module 1010 is configured to determine, during a process of converting an image format of a first image frame of a first image type to a second image type, error information of a hardware module in which a functional safety error occurs.

The second determining module 1020 is configured to determine, based on the error information determined by the first determining module 1010, a reliability evaluation result of a second image frame converted to the second image type.

The third determining module 1030 is configured to determine a data attribute of the second image frame based on the reliability evaluation result of the second image frame that is determined by the second determining module 1020.

The post-processing module 1040 is configured to perform post-processing on the second image frame according to a post-processing manner adapted to the data attribute determined by the third determining module 1030.

In some optional examples, as shown in FIG. 11, the second determining module 1020 includes:

a first determining submodule 1110, configured to determine, based on the error information determined by the first determining module 1010, error occurrence counts corresponding respectively to a plurality of preset error levels;
a second determining submodule 1120, configured to determine, based on the error occurrence counts corresponding respectively to the plurality of preset error levels that are determined by the first determining submodule 1110, reliability score values corresponding respectively to the plurality of preset error levels;
a third determining submodule 1130, configured to determine, based on the error occurrence counts corresponding respectively to the plurality of preset error levels that are determined by the first determining submodule 1110, level weights corresponding respectively to the plurality of preset error levels; and
a weighting submodule 1140, configured to weight the reliability score values corresponding respectively to the plurality of preset error levels that are determined by the second determining submodule 1120 by the level weights corresponding respectively to the plurality of preset error levels that are determined by the third determining submodule 1130, to obtain a reliability evaluation result of the second image frame.

In some optional examples, the third determining submodule 1130 includes:

a first determining subunit, configured to determine, for any one of the plurality of preset error levels, a preset occurrence count range to which the error occurrence count corresponding to that preset error level belongs;
a second determining subunit, configured to determine a weight adjustment manner adapted to the preset occurrence count range determined by the first determining subunit; and
an adjustment subunit, configured to adjust a preset weight corresponding to that preset error level according to the weight adjustment manner determined by the second determining subunit, to obtain a level weight corresponding to that preset error level.

In some optional examples, the second determining module 1020 includes:

an evaluation submodule, configured to evaluate a degree of impact of the error information determined by the first determining module 1010 on reliability of the second image frame by a pre-trained reliability evaluation model; and
an obtaining submodule, configured to obtain the reliability evaluation result of the second image frame based on the degree of impact that is evaluated by the evaluation submodule.

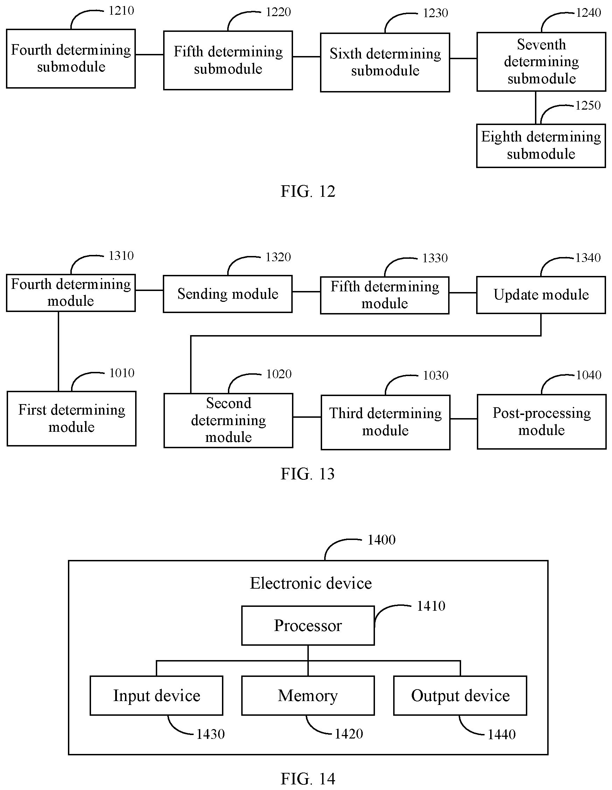

In some optional examples, as shown in FIG. 12, the third determining module 1030 includes:

a fourth determining submodule 1210, configured to determine a first reliability evaluation score and a second reliability evaluation score based on reliability evaluation results of two second image frames respectively, wherein the two second image frames are obtained through different image processing paths;
a fifth determining submodule 1220, configured to determine a score difference between the first reliability evaluation score and the second reliability evaluation score that are determined by the fourth determining submodule 1210;

a sixth determining submodule 1230, configured to determine a first numerical relationship between the score difference determined by the fifth determining submodule 1220 and a preset difference;

a seventh determining submodule 1240, configured to determine a second numerical relationship between the first reliability evaluation score and the second reliability evaluation score that are determined by the fourth determining submodule 1210; and

an eighth determining submodule 1250, configured to determine respective data attributes of the two second image frames based on the first numerical relationship determined by the sixth determining submodule 1230 and the second numerical relationship determined by the seventh determining submodule 1240.

In some optional examples, as shown in FIG. 13, the apparatus provided in the embodiments of the present disclosure further includes:

a fourth determining module 1310, configured to determine, after the error information is determined by the first determining module 1010, a target module on an image processing path where the hardware module is located;

a sending module 1320, configured to send an error reporting instruction to the target module determined by the fourth determining module 1310;

a fifth determining module 1330, configured to determine response information of the target module determined by the fourth determining module 1310 to the error reporting instruction sent by the sending module 1320; and

an update module 1340, configured to update the error information determined by the first determining module 1010 based on the response information determined by the fifth determining module 1330.

In some optional examples, the post-processing module 1040 includes:

a first processing submodule, configured to, in response to that the data attribute determined by the third determining module 1030 indicates that the second image frame is suitable for a preset driving task, perform, based on the second image frame, driving control on a movable device where a sensor for collecting the first image frame is located; and

a second processing submodule, configured to discard the second image frame in response to that the data attribute determined by the third determining module 1030 indicates that the second image frame is not suitable for the preset driving task.

In the apparatus in the present disclosure, various optional embodiments, optional implementations, and optional examples described above may be flexibly selected and combined according to requirements, so as to implement corresponding functions and effects. These are not enumerated in the present disclosure.

For beneficial technical effects corresponding to the exemplary embodiments of this apparatus, reference may be made to the corresponding beneficial technical effects in the section of exemplary method described above, and details are not described herein again.

Exemplary electronic device

FIG. 14 is a block diagram of an electronic device according to an embodiment of the present disclosure. An electronic device 1400 includes one or more processors 1410 and a memory 1420.

The processor 1410 may be a central processing unit (CPU) or another form of processing unit having a data processing capability and/or an instruction execution capability, and may control other components in the electronic device 1400 to implement desired functions.

The memory 1420 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1410 may run the one or more program instructions to implement the method according to various embodiments of the present disclosure that are described above and/or other desired functions.

In an example, the electronic device 1400 may further include an input device 1430 and an output device 1440. These components are connected to each other through a bus system and/or another form of connection mechanism (not shown).

The input device 1430 may further include, for example, a keyboard and a mouse.

The output device 1440 may output various information to the outside, and may include, for example, a display, a speaker, a printer, a communication network, and a remote output device connected to the communication network.

Certainly, for simplicity, FIG. 14 shows only some of components in the electronic device 1400 that are related to the present disclosure, and components such as a bus and an input/output interface are omitted. In addition, according to specific application situations, the electronic device 1400 may further include any other appropriate components.

Exemplary computer program product and computer readable storage medium

In addition to the foregoing method and device, embodiments of the present disclosure may also relate to a computer program product, which includes computer program instructions. When the instructions are run by a processor, the processor is enabled to perform the steps, of the method according to the embodiments of the present disclosure, that are described in the "Exemplary method" section of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium storing computer program instructions. When the computer program instructions are run by the processor, the processor is enabled to perform the steps, of the method according to the embodiments of the present disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples but are not for limitation, and it cannot be considered that these advantages, superiorities, and effects are necessary for the embodiments of the present disclosure. Specific details described above are merely for examples and for ease of understanding, rather than limitations. The details described above do not limit that the present disclosure must be implemented by the foregoing specific details.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

**1.** A functional safety-based image frame processing method, comprising:

during a process of converting an image format of a first image frame of a first image type to a second image type, determining error information of a hardware module in which a functional safety error occurs;
determining, based on the error information, a reliability evaluation result of a second image frame converted to the second image type;
determining a data attribute of the second image frame based on the reliability evaluation result of the second image frame; and
performing post-processing on the second image frame according to a post-processing manner adapted to the data attribute.

**2.** The method according to claim 1, wherein the determining, based on the error information, a reliability evaluation result of a second image frame converted to the second image type comprises:

determining, based on the error information, error occurrence counts corresponding respectively to a plurality of preset error levels;
determining, based on the error occurrence counts corresponding respectively to the plurality of preset error levels, reliability score values corresponding respectively to the plurality of preset error levels;

determining, based on the error occurrence counts corresponding respectively to the plurality of preset error levels, level weights corresponding respectively to the plurality of preset error levels; and

weighting the reliability score values corresponding respectively to the plurality of preset error levels by the level weights corresponding respectively to the plurality of preset error levels, to obtain a reliability evaluation result of the second image frame.

3.  The method according to claim 2, wherein the determining, based on the error occurrence counts corresponding respectively to the plurality of preset error levels, level weights corresponding respectively to the plurality of preset error levels comprises:

for any one of the plurality of preset error levels, determining a preset occurrence count range to which the error occurrence count corresponding to that preset error level belongs;

determining a weight adjustment manner adapted to the preset occurrence count range; and

adjusting a preset weight corresponding to that preset error level according to the weight adjustment manner, to obtain a level weight corresponding to that preset error level.

4.  The method according to claim 1, wherein the determining, based on the error information, a reliability evaluation result of a second image frame converted to the second image type comprises:

evaluating a degree of impact of the error information on reliability of the second image frame by a pre-trained reliability evaluation model; and

obtaining the reliability evaluation result of the second image frame based on the degree of impact.

5.  The method according to claim 1, wherein the determining a data attribute of the second image frame based on the reliability evaluation result of the second image frame comprises:

determining a first reliability evaluation score and a second reliability evaluation score based on respective reliability evaluation results of two second image frames, wherein the two second image frames are obtained through different image processing paths;

determining a score difference between the first reliability evaluation score and the second reliability evaluation score;

determining a first numerical relationship between the score difference and a preset difference;

determining a second numerical relationship between the first reliability evaluation score and the second reliability evaluation score; and

determining respective data attributes of the two second image frames based on the first numerical relationship and the second numerical relationship.

6.  The method according to claim 1, further comprising:

determining, after the error information is determined, a target module on an image processing path where the hardware module is located;

sending an error reporting instruction to the target module;

determining response information of the target module to the error reporting instruction; and

updating the error information based on the response information.

7.  The method according to any one of claims 1 to 6, wherein the performing post-processing on the second image frame according to a post-processing manner adapted to the data attribute comprises:

in response to the data attribute indicating that the second image frame is suitable for a preset driving task, performing, based on the second image frame, driving control on a movable device where a sensor for collecting the first image frame is located; and

discarding the second image frame in response to the data attribute indicating that the second image frame is not suitable for the preset driving task.

8.  A functional safety-based image frame processing apparatus, comprising:

a first determining module, configured to determine, during a process of converting an image format of a first image frame of a first image type to a second image type, error information of a hardware module in which a functional safety error occurs;

a second determining module, configured to determine, based on the error information determined by the first determining module, a reliability evaluation result of a second image frame converted to the second image type;

a third determining module, configured to determine a data attribute of the second image frame based on the reliability evaluation result of the second image frame that is determined by the second determining module; and

a post-processing module, configured to perform post-processing on the second image frame according to a post-processing manner adapted to the data attribute determined by the third determining module.

9. A computer readable storage medium, wherein the storage medium stores a computer program, and the computer program is used for implementing the functional safety-based image frame processing method according to any one of claims 1 to 7.

10. An electronic device, wherein the electronic device comprises:

a processor; and
a memory, configured to store processor-executable instructions, wherein
the processor is configured to read the executable instructions from the memory, and execute the executable instructions to implement the functional safety-based image frame processing method according to any one of claims 1 to 7.

110   120   130   140   150   Processing
result of the
image
processing
path

Raw image frame → First hardware module → Second hardware module → Third hardware module → Fourth hardware module — · — Fifth hardware module →

Image processing path

FIG. 1

First image frame of a first image type → First hardware module → Second hardware module → Third hardware module → Fourth hardware module — · — Fifth hardware module → Second image frame of a second image type

110   120   130   140   150

Obtain a reliability evaluation result of the second image frame, to determine a post-processing manner for the second image frame

Error information of a hardware module in which a functional safety error occurs

Sixth hardware module

210

FIG. 2

EP 4 773 071 A1

---

During a process of converting an image format of a first image frame of a first image type to a second image type, determining error information of a hardware module in which a functional safety error occurs — 310

Determining, based on the error information, a reliability evaluation result of a second image frame converted to the second image type — 320

Determining a data attribute of the second image frame based on the reliability evaluation result of the second image frame — 330

Performing post-processing on the second image frame according to a post-processing manner adapted to the data attribute — 340

FIG. 3

Determining, based on error information, error occurrence counts corresponding respectively to a plurality of preset error levels — 410

Determining, based on the error occurrence counts corresponding respectively to the plurality of preset error levels, reliability score values corresponding respectively to the plurality of preset error levels — 420

Determining, based on the error occurrence counts corresponding respectively to the plurality of preset error levels, level weights corresponding respectively to the plurality of preset error levels — 430

Weighting the reliability score values corresponding respectively to the plurality of preset error levels by the level weights corresponding respectively to the plurality of preset error levels, to obtain a reliability evaluation result of the second image frame — 440

FIG. 4

18

EP 4 773 071 A1

For any one of the plurality of preset error levels, determining a preset occurrence count range to which the error occurrence count corresponding to that preset error level belongs  —4301

Determining a weight adjustment manner adapted to the preset occurrence count range to which the error occurrence count corresponding to that preset error level belongs  —4303

Adjusting a preset weight corresponding to that preset error level according to the determined weight adjustment manner, to obtain a level weight corresponding to that preset error level  —4305

FIG. 5

Obtaining a pre-trained reliability evaluation model  —610

Evaluating a degree of impact of error information on reliability of a second image frame by the reliability evaluation model  —620

Obtaining a reliability evaluation result of the second image frame based on the degree of impact  —630

FIG. 6

19

Determining a first reliability evaluation score and a second reliability evaluation score based on respective reliability evaluation results of two second image frames, where the two second image frames are obtained through different image processing paths /—710

Determining a score difference between the first reliability evaluation score and the second reliability evaluation score /—720

Determining a first numerical relationship between the score difference and a preset difference /— 730

Determining a second numerical relationship between the first reliability evaluation score and the second reliability evaluation score /—740

Determining respective data attributes of the two second image frames based on the first numerical relationship and the second numerical relationship /—750

FIG. 7

Determining a target module on an image processing path where a hardware module in which a functional safety error occurs is located /—810

Sending an error reporting instruction to the target module /— 820

Determining response information of the target module to the error reporting instruction /—830

Updating, based on the response information, error information of the hardware module in which the functional safety error occurs /—840

FIG. 8

FIG. 9

FIG. 10

FIG. 11

1210
Fourth determining submodule

1220
Fifth determining submodule

1230
Sixth determining submodule

1240
Seventh determining submodule

1250
Eighth determining submodule

FIG. 12

1310
Fourth determining module

1320
Sending module

1330
Fifth determining module

1340
Update module

1010
First determining module

1020
Second determining module

1030
Third determining module

1040
Post-processing module

FIG. 13

1400
Electronic device

1410
Processor

1430
Input device

1420
Memory

1440
Output device

FIG. 14

## INTERNATIONAL SEARCH REPORT

| International application No. |
| --- |
| **PCT/CN2025/075375** |

### A. CLASSIFICATION OF SUBJECT MATTER

G06T1/20(2006.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 图像处理, 通道, 硬件错误, 格式转换, 可靠性评估, image process, channel, hardware error, format conversion, reliability assessment

### C. DOCUMENTS CONSIDERED TO BE RELEVANT

| Category* | Citation of document, with indication, where appropriate, of the relevant passages | Relevant to claim No. |
| --- | --- | --- |
| PX | CN 118037530 A (BEIJING HORIZON INFORMATION TECHNOLOGY CO., LTD.) 14 May 2024 (2024-05-14)<br>claims 1-10 | 1-10 |
| A | CN 115743153 A (SHANGHAI ANTING HORIZON INTELLIGENT TRANSPORTATION TECHNOLOGY CO., LTD.) 07 March 2023 (2023-03-07)<br>description, paragraphs 3-126 | 1-10 |
| A | CN 111681199 A (BEIJING HORIZON ROBOTICS TECHNOLOGY RESEARCH AND DEVELOPMENT CO., LTD.) 18 September 2020 (2020-09-18)<br>description, paragraphs 4-12 | 1-10 |
| A | CN 102629968 A (HU'NAN RAMON SCIENCE & TECHNOLOGY CO., LTD.) 08 August 2012 (2012-08-08)<br>entire document | 1-10 |
| A | CN 116542888 A (TIANJIN UNIVERSITY OF SCIENCE AND TECHNOLOGY) 04 August 2023 (2023-08-04)<br>entire document | 1-10 |

☑ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **28 April 2025** | **29 April 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/075375** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022038621 A1 (SAMSUNG ELECTRONICS CO., LTD.) 03 February 2022 (2022-02-03) entire document | 1-10 |

Form PCT/ISA/210 (second sheet) (July 2022)

## INTERNATIONAL SEARCH REPORT
### Information on patent family members

| International application No. |
| --- |
| **PCT/CN2025/075375** |

| Patent document cited in search report | | | Publication date (day/month/year) | Patent family member(s) | | | Publication date (day/month/year) |
| --- | --- | --- | --- | --- | --- | --- | --- |
| CN | 118037530 | A | 14 May 2024 | None | | | |
| CN | 115743153 | A | 07 March 2023 | WO | 2024131084 | A1 | 27 June 2024 |
| CN | 111681199 | A | 18 September 2020 | CN | 111681199 | B | 03 November 2023 |
| CN | 102629968 | A | 08 August 2012 | None | | | |
| CN | 116542888 | A | 04 August 2023 | None | | | |
| US | 2022038621 | A1 | 03 February 2022 | WO | 2020235852 | A1 | 26 November 2020 |
| | | | | US | 11977981 | B2 | 07 May 2024 |
| | | | | KR | 20200132569 | A | 25 November 2020 |
| | | | | KR | 102708717 | B1 | 23 September 2024 |

Form PCT/ISA/210 (patent family annex) (July 2022)

**REFERENCES CITED IN THE DESCRIPTION**

**Patent documents cited in the description**

- CN 202410175803